Europäisches Patentamt

European Patent Office

Office européen des brevets

(11) Publication number: **0 108 470**
A1

# (12) EUROPEAN PATENT APPLICATION

(21) Application number: 83304473.8

(22) Date of filing: 03.08.83

(51) Int. Cl.³: **G 01 B 11/04**
G 01 N 21/88, H 04 N 7/18

(30) Priority: 13.08.82 GB 8223372

(43) Date of publication of application:
16.05.84 Bulletin 84/20

(84) Designated Contracting States:
DE FR GB IT

(71) Applicant: BL TECHNOLOGY LIMITED
35-38 Portman Square
London W1H OHQ(GB)

(72) Inventor: Wilson, John Francis
36 St Davids Road
Thornbury Avon(GB)

(72) Inventor: Cartwright, David John
139 Leach Green Lane
Rednal Birmingham(GB)

(72) Inventor: Mills, Robert
1 Ridge Street
Stourbridge West Midlands(GB)

(74) Representative: Waters, Jeffrey
ARG Patent Department Cowley Body Plant
Cowley Oxford OX4 5NL(GB)

(54) Apparatus and method for inspecting a component.

(57) A component (12) for dimensional inspection is rotated against a contrasting background while being scanned by an optical scanner (14) comprising a straight line array of sensors (18). The scanner resolution is sufficiently high to ensure that its output defines a linear dimension of the component (12) which contrasts strongly with its background. By rotating the scanner (14) (or the component (12)) a series of straight line scans is obtained. Given a recorded scan for an intolerance component it is possible to scan subsequent similar components and reject those with an out of tolerance scan or scans.

FIG.1.

— 1 —

0108470

## Component Inspection

This invention relates to the inspection of a manufactured component. The term "component" is intended to cover not only an individual part but also sub assemblies and assemblies made up of any number of discrete items. In addition "inspection" is intended to cover dimensional measurement, verification, shape recognition and defect detection.

The invention provides apparatus for inspecting a component, comprising means for imparting relative rotational and translational movement between the component and a scanner, the scanner being arranged to repeatedly measure the length between the boundaries of the component during the relative movement, and processing means for recording the maximum and minimum values of the measured length for the component.

Typically there will be more than are maximum or minimum value recorded for each component.

Advantageously, the scanner consists of a row of image sensors.

Advantageously, the scanner is arranged to rotate, and a conveyor is provided for moving the component past the scanner.

Typical speeds of rotation are from 100 to 1000 revolutions per minute; typical speeds for the conveyor are from 1 to 50 feet per minute; typical speeds for the scanner are 0.1 to 10 millisecond for one scan; and typically the scanner may consist of from 500 to 5000 image sensors e.g. photo diodes.

Advantageously, the processing means is arranged to compare the recorded maximum and minimum values with predetermined maximum and minimum values to establish whether the component dimensions lie within tolerance limits.

The invention also provides apparatus for inspecting a component which needs to lie within dimensional tolerances characterised by: a scanner; a display means for presenting a component for inspection to the scanner and to enable relative movement to occur between component and a scanning field generated by the scanner; a scanner output processing means whereby data values representing length between boundaries of the component can be compared one with another; a sampler enabling the values to be sampled to identify a significant value arising from points of inflection in a series of such values; a processor whereby the significant values are used to establish a characteristic signature or series of signatures for the component; and a comparator whereby the characteristic signature or series thereof can be compared with a predetermined signature or signatures to establish whether the component lies within dimensional tolerances.

The invention provides a means of obtaining the minimum amount of information necessary to establish a component integrity. It also minimises data analysis needed to achieve a hundred percent inspection of components in real time. An inspection system based on the invention does not require a component to be inspected to be precisely located relative to the scanning system and indeed the system allows for variable component placement.

An exemplary embodiment of the invention will now be described with reference to the accompanying drawings of which;

Figure 1 is a general pictorial view of an inspection system;

Figure 2 shows features of a rectangular section component subject to inspection of the system of Figure 1;

Figure 3 shows a dimensional "signature" of the component of Figure 2;

Figure 4 shows tolerance limits imposed on the signature of Figure 3;

Figure 5 shows the results of presenting a component which is offset relative to that shown in Figure 2;

Figure 6 shows a dimensional signature of the component of Figure 5;

Figure 7 shows a faulty component;

Figure 8 shows the dimensional signature of the component of Figure 7; and

Figure 9 shows a component of complex shape.

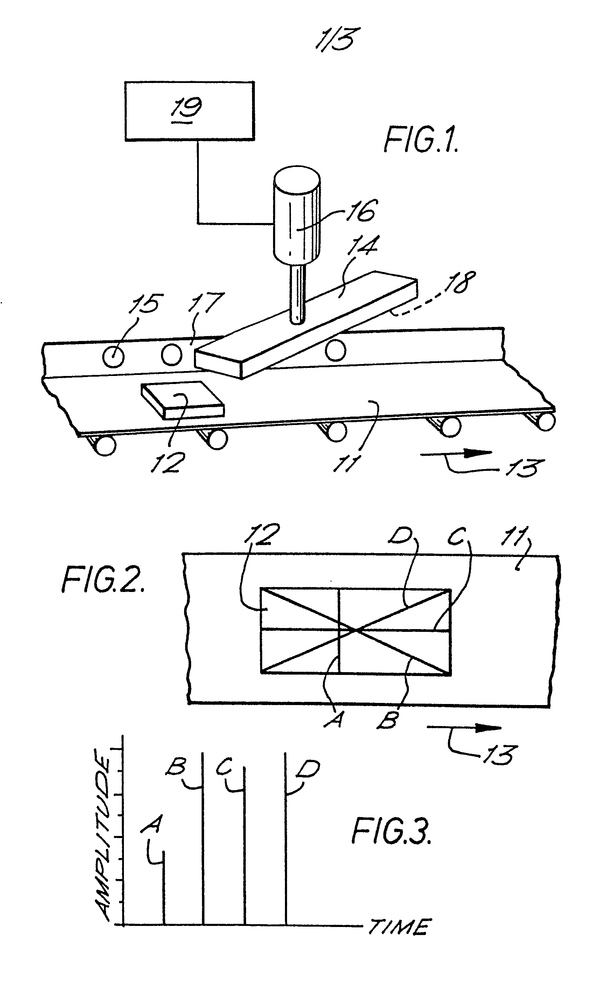

Figure 1 shows a conveyor belt 11 adapted to carry components, typically component 12, in the direction of arrow 13 pass. . a scanner head 14. The surface of the belt 11 together with lights 15 serve to provide a strongly contrasting background to the component 12 for optimised operation of the scanner head 14.

The head 14 is rotated by way of a motor. The head 14 is made up of a row 18 of solid state image sensors directed to scan the surface of the belt 11. The number of sensors in the row 18 depends on the degree of definition required which in turn depends on the tolerance limits which are to be imposed on the component 12. The output of the sensor head 14 is fed through a data processing unit 19 which incorporates a micro processor. The unit 19 receives information as to the output of each sensor in the row 18 and subjects it to processing and sampling as will be .herinafter described.

Figure 2 shows a view of component 12 as seen by the head 14 shown in Figure 1. As referred to in connection with Figure 1 belt 11 carries component 12 passed the head in the direction of arrow 13. This linear movement together with rotation of the head 14 causes the row of sensors 18 to sense the component 12 as a series of displaced straight lines (typically line A) whose length changes during the period of relative movement of component and head. The contrasting background to the component 12 provided by the belt 11 and the light ensures that the ends of line A (a function of the geometry of component 12) are sharply defined. The output of scanner 14 represents a measure of length of line A will in the course of further relative movement indicate an increasing length of linear dimension up to an output representing line B which is a diagonal of the component 12. Further scanning will result in an output indicating a progressive reduction in length until an output representative of line C is reached whereupon the output will start again to represent a line of increasing length. Continued scanning will result in an output indicating an increase in length with a value representing line D is reached in respect of a decreasing length until the minimum length of a line effectively at 180° to line A is reached. This data is subject to in unit 19 to the extent that only outputs corresponding to the maxima or minima (points of inflection) represented by the ends of lines A to D are retained. This enables a "signature" of the component to be retained as shown in Figure 3. This shows a frequency spectrum wherein the X axis represent a function of time and the Y axis represents the output amptitude of the sensor. The four bars A-D are lettered to correspond with lines A to D.

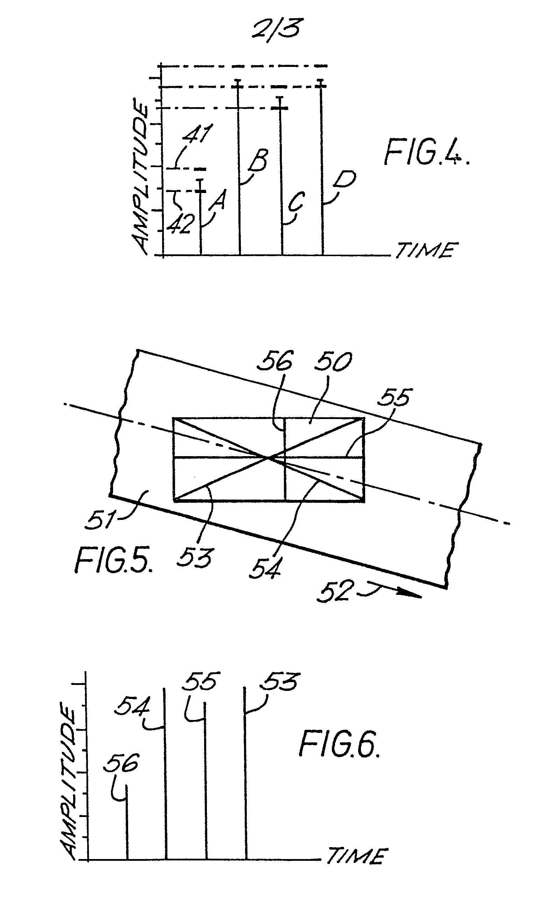

Figure 4 shows the graph of Figure 3 with tolerance levels imposed on it. For a given component as long as the length of line A lies between limits 41, 42 the component is acceptable in respect of this particular dimension.

The precise location of component 12 on belt 11 does not affect the utilisation of the scanner. Figure 5 shows a component 50 of similar form to component 12 of Figure 1 but being carried along belt 51 at an angle to the belts direction of travel shown by arrow 52. The length of line corresponding to diagonals 53, 54 and major and minor axis 55, 56 of the component will provide a signature shown in Figure 6 of identical form to that shown in Figure 3 and 4.

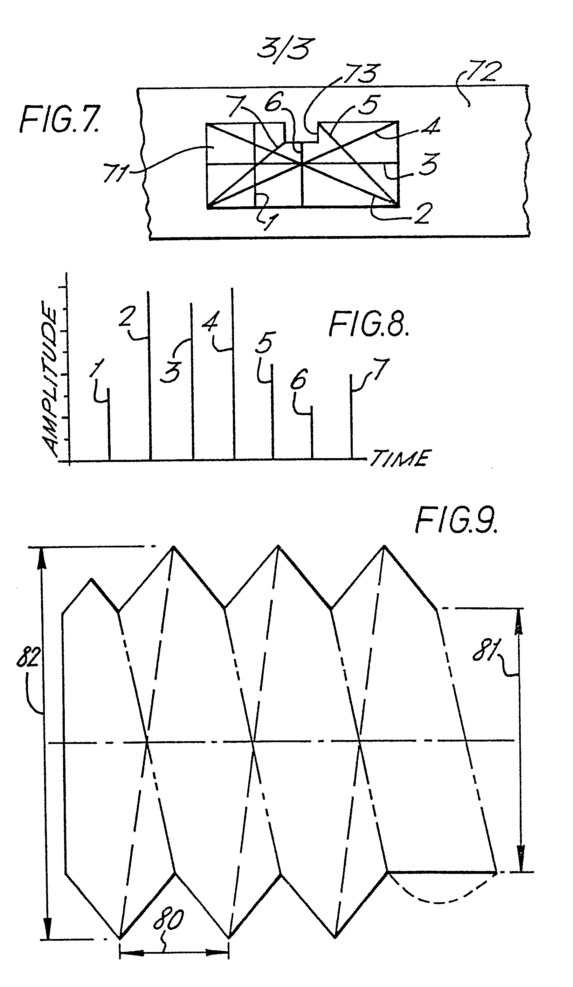

Figure 7 and 8 show a defective component and its signature.

Figure 7 shows a component 71 on belt 72 having a defect in the form of a recess 73. In this case a scan similar to that described in connection with Figures 1 to 4 will reveal a signature wherein a number of additional maxima or minima producing additional significan lengths retained in the processor unit being recorded. Only outputs 1 and 2 corresponding to diag of the component and outputs 3 and 4 corresponding to the major and minor axis respectively will be comparable with that of an acceptable component.

There will now also be three additional outputs 5,6,7 caused by the existence of the defect 73 which create maxima or minima which will be retained by the processor as significant values. The signature of the component 73 is shown in Figure 8 with the bars 1 - 7 numbered to correspond with the dimension of the compoment 71. The processor 19 has suitable programmes to cause the rejection of the component at a suitable point in the travel of belt 51.

The processor 19 permits storage of several previously identified signatures which can be re-called for use by simple interaction with suitable input/output devices. In addition new programmes can be entered by a self generating process of storing maximum and minimum values derived from a master or other acceptable component. Such programmes would later be verified and toleranced by a system operator.

Straight forward mathematical equations enable initial analysis and filtering of incoming information to be acheived. Other algorithms can be used to obtain obscure or otherwise incompatible dimensional information.

Comparison of generated data can also be used to varify specific details to meet overall inspection requirements. This enables complex shapes to be simplified to that of straight line functions. Tupically Figure 9 shows a screw thread which can be subjected to a scanning process as hereinbefore described. The output represented by the length of section 80 will clearly be repeated as the scanning process continues.

0108470

The root diameter 81 needs to be recorded only once (a minimum value) and a maximum value corresponding to the crest diameter 82 will also only need to be recorded once. Thus a relatively small number of values will be needed to create a signature for an acceptable screw thread.

## CLAIMS

1. Apparatus for inspecting a component, comprising means for imparting relative roatational and translational movement between the component and a scanner, the scanner being arranged to repeatedly measure the length between the boundaries of the component during the relative movement, and processing means for recording the maximum and minimum values of the measured length for the component.

2. Apparatus as claimed in claim 1, wherein the scanner consists of a row of image sensors.

3. Apparatus as claimed in claim 1 or claim 2, wherein the scanner is arranged to rotate.

4. Apparatus as claimed in claim 3, wherein a conveyor is provided for moving the component past the scanner.

5. Apparatus as claimed in any one of claims 1 to 4, wherein the processing means is arranged to compare the recorded maximum and minimum values with predetermined maximum and minimum values to establish whether the compone: dimensions lie within tolerance limits.

6. Apparatus as claimed in any one of claims 1 to 5, wherein the scanner respondes to visible electromagnetic radiation.

7. Apparatus for inspecting a component substantially as hereinbefore described with reference to and as shown in the accompanying drawings.

8. A method of inspecting a component, which comprises the steps of imparting relative rotational and translational movement between the component and a scanner, repeatedly measuring the length between the boundaries of the component during the relative movement, and recording

0108470

the maximum and minimum values of the measured length for the
component.

1/3

FIG.1.

FIG.2.

FIG.3.

AMPLITUDE

TIME

2/3

FIG.4.

FIG.5.

FIG.6.

0108470

FIG.7.

FIG.8.

FIG.9.

0108470

**European Patent Office**

**EUROPEAN SEARCH REPORT**

Application number

## DOCUMENTS CONSIDERED TO BE RELEVANT

EP 83304473.8

| Category | Citation of document with indication, where appropriate, of relevant passages | Relevant to claim | CLASSIFICATION OF THE APPLICATION (Int. Cl. ³) |
|---|---|---|---|
| A | RADIO ELEKTRONIK SCHAU, Heft 6, 1974, Wien <br> H.H. KRIEGER, VIDEOMETRIK – ein Auge in die Zukunft, pages 334-336 <br> * Totality * <br> -- | 1 | G 01 B 11/04 <br> G 01 N 21/88 <br> H 04 N 7/18 |
| A | DE – A1 – 2 720 804 (BRITISH STEEL) <br> * Claims 1-6; page 6, lines 1-10; fig. 1 * <br> -- | 1,3,4, 6,8 | |
| A | DE – A1 – 2 940 262 (ARMBRUSTER) <br> * Claim 1; page 3, lines 7-12 * <br> -- | 1,2,4, 6 | |
| A | US – A – 4 254 433 (DEWAR) <br> * Abstract; fig. 2 * <br> ---- | 1,2,4, 6 | |

TECHNICAL FIELDS SEARCHED (Int. Cl. ³)

G 01 B
G 01 N
H 04 N

The present search report has been drawn up for all claims

| Place of search | Date of completion of the search | Examiner |
|---|---|---|
| VIENNA | 28-11-1983 | ERBER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82